# EUROPÄISCHE PATENTSCHRIFT

(11) **EP 0 712 230 B1**
(45) Veröffentlichungstag und Bekanntmachung des Hinweises auf die Patenterteilung: **24.07.2002**
(21) Anmeldenummer: 95203070.8
(22) Anmeldetag: 10.11.1995
(51) Int. Cl.: H04M 3/54, H04M 1/00, H04M 1/72

(54) **Kommunikationssystem**
Communication system
Système de communication

(30) Priorität: 12.11.1994 DE 4440500
(43) Veröffentlichungstag der Anmeldung: 15.05.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Schröter, Andreas, Dipl.-Ing., c/o Philips, D-22335 Hamburg (DE)
(74) Vertreter: Volmer, Georg, Dipl.-Ing.

(56) Entgegenhaltungen:
- EP-A- 0 529 721
- PATENT ABSTRACTS OF JAPAN vol. 015, no. 108 (E-1045), 14. März 1991 & JP 02 312493 A (IWATSU ELECTRIC CO LTD;OTHERS: 01), 27. Dezember 1990
- PATENT ABSTRACTS OF JAPAN vol. 018, no. 428 (E-1591), 10. August 1994 & JP 06 133058 A (FUJITSU LTD), 13. Mai 1994
- "ECMA 177: Private Telecommunication Networks - Call Transfer Supplementary Service" , EUROPEAN ASSOCIATION FOR STANDARDIZING INFORMATION AND COMMUNICATION SYSTEMS , GENEVA XP002081548 * Seite 4 *

## Beschreibung

Die Erfindung betrifft ein Kommunikationssystem und ein Verfahren zum Betreiben eines Kommunikationssystems gemäß den Oberbegriffen der Patentansprüche 1 und 4.

Aus der DE 42 07 748 A1 ist ein solches Kommunikationssystem bekannt. Es enthält eine als ISDN-Nebenstellenvermittlungsanlage ausgebildete Vermittlungsvorrichtung, an die eine Vielzahl von schnurgebundenen Endgeräten (Telephone) angeschlossen sind. Weiterhin sind Basisstationen an die Vermittlungsvorrichtung angeschlossen, die eine Kommunikation mit schnurlosen Endgeräten (schnurlosen Telephonen) ermöglichen.

Bei solchen Kommunikationssystemen gehört es zum Stand der Technik, daß mit Hilfe der schnurgebundenen Endgeräte Leistungsmerkmale wie eine Rufumleitung oder Rufweiterschaltung in der Vermittlungsvorrichtung aktivierbar bzw. deaktivierbar sind. Ein Teilnehmer, der beispielsweise in seinem Büro sowohl ein schnurgebundenes als auch ein schnurloses Endgerät zur Verfügung hat, kann beliebig wählen, mit welchem Endgerät er ankommende Rufe entgegennehmen will. So wird er Rufe mit dem in der Regel komfortableren, mit vielen Leistungsmerkmalen ausgestatteten und über eine bessere Übertragungsqualität verfügendem schnurgebundenen Endgerät empfangen, wenn er sich in seinem eigenen Büro aufhält. Für den Fall, daß er sein Büro verläßt und erreichbar bleiben will, wird der Teilnehmer sein schnurloses Endgerät mitnehmen und mit Hilfe des schnurgebundenen Endgeräts in der Vermittlungsvorrichtung eine Rufumleitung oder Rufweiterschaltung auf sein schnurloses Endgerät einstellen, um mit diesem Endgerät Rufe empfangen und Kommunikationsvorgänge durchführen zu können. Nach der Rückkehr in sein Büro wird er die Rufumleitung oder Rufweiterschaltung wieder deaktivieren. Bei der Rufumleitung werden ankommende Rufe durch die Vermittlungsvorrichtung direkt zu dem entsprechenden Endgerät umgeleitet. Bei der Rufweiterschaltung wird ein ankommender Ruf erst dann umgeleitet, wenn dieser in einem vorgebbaren Zeitraum nicht von dem betreffenden Teilnehmer entgegengenommen wurde.

Aus Patent Abstracts of Japan, vol. 018, no. 428 (E-1591), 10. August 1994, JP 06 133058 A (Fujitsu Ltd), 13. Mai 1994 ist ein Kommunikationssystem mit einer Vermittlungsvorrichtung, einem schnurgebundenen Endgerät und einem schnurlosen Endgerät bekannt, bei dem Mittels Detektionsmitteln detektiert wird, ob das schnurlose Endgerät sich im abgenommenen Zustand befindet. Tritt dieser Zustand ein, wird diese Information sowohl an die zum schnurlosen Endgerät gehörige Basisstation als auch an das schnurgebundene Endgerät übertragen, die wiederum die Information an die Vermittlungsvorrichtung weitergeben. Die Vermittlungsvorrichtung leitet nach Erhalt der Information ankommende Rufe, die an das schnurgebundene Endgerät gerichtet sind, an das schnurlose Endgerät um.

Der Erfindung liegt die Aufgabe zugrunde, daß Kommunikationssystem der eingangs genannten Art für den Teilnehmer komfortabler zu gestalten.

Die Aufgabe wird durch die Merkmale der kennzeichnenden Teile der Patentansprüche 1 und 4 gelöst.

Verläßt der das schnurgebundene und das schnurlose Endgerät benutzende Teilnehmer sein Büro mit dem schnurlosen Endgerät, so kann es passieren, daß dieser aus Unachtsamkeit nicht für eine manuelle Aktivierung der Rufumleitung oder Rufweiterschaltung auf sein schnurloses Endgerät sorgt. Damit ist er während der Zeit seiner Abwesenheit nicht wie eigentlich beabsichtigt über sein schnurloses Endgerät erreichbar. Durch die Erfindung wird für diesen Anwendungsfall die Rufumleitung oder Rufweiterschaltung und damit die Erreichbarkeit des Teilnehmers auch ohne manuelle Aktivierung der Rufumleitung oder Rufweiterschaltung sichergestellt, so daß das erfindungsgemäße Kommunikationssystem für den Benutzer komfortabler als bisher übliche Systeme ist.

Weiterhin ist es dem Benutzer der beiden Endgeräte möglich, auch während eines mit Hilfe des schnurgebundenen Endgeräts durchgeführten Kommunikationsvorgangs wie beispielsweise einem Telephongespräch eine Umschaltung auf das schnurlose Endgerät (Verbindungsübergabe) zu bewirken, ohne weitere Maßnahmen als das Abheben des schnurlosen Endgeräts von seiner Aufnahmevorrichtung treffen zu müssen. So kann das laufende Gespräch z.B. in einem anderen Büro ohne Unterbrechung fortgesetzt werden.

In einer Ausgestaltung der Erfindung enthält das schnurgebundene Endgerät Mittel zum Empfang eines durch das Entfernen des schnurlosen Endgeräts aus seiner Aufnahmevorrichtung erzeugten Detektorsignals und Mittel zum Umsetzen dieses Detektorsignals zum Aktivieren der Rufumleitung oder Rufweiterschaltung.

In einfacher Weise kann so die Rufumleitung oder Rufweiterschaltung realisiert werden. Bei modernen Endgeräten von Nebenstellenanlagen beispielsweise kann ein bereits vorhandener Anschluß zum Empfang des Detektorsignals verwendet werden. Für das erfindungsgemäße Umsetzen des Detektorsignals reicht es aus, eine einfache Programmänderung für einen in dem schnurgebundenen Endgerät verwendeten Mikroprozessor durchzuführen.

In einer anderen Ausgestaltung ist das schnurlose Endgerät nach dem Entfernen aus seiner Aufnahmevorrichtung zum Senden eines Steuersignals an eine Basisstation vorgesehen und die Basisstation dient zur Aktivierung der Rufumleitung oder Rufweiterschaltung in Abhängigkeit von diesem Steuersignal.

In diesem Fall beschränkt sich der technische Aufwand zum erfindungsgemäßen Implementieren der automatischen Rufumleitung oder Rufweiterschaltung im wesentlichen auf einfache Mittel zum Detektieren des Entfernens des schnurlosen Endgeräts aus seiner Aufnahmervorrichtung und auf eine einfache Umprogammierung des schnurlosen Endgerät derart, daß dieses nach dem Entfernen des schnurlosen Endgeräts das entsprechende Steuersignal an die Basisstation sendet.

Ausführungsbeispiele der Erfindung werden nachfolgend anhand der Zeichnungen näher erläutert. Es zeigen:
- Fig. 1: ein erfindungsgemäßes Kommunikationssystem,
- Fig. 2: eine weitere Ausführung des erfindungsgemäßen Kommunikationssystems,
- Fig. 3: ein Blockschaltbild eines schnurgebundenen Endgerätes des Kommunikationssystems,
- Fig. 4: ein Blockschaltbild eines schnurlosen Endgerätes des Kommunikationssystems und
- Fig. 5: ein Blockschaltbild einer Basisstation des Kommunikationssystems.

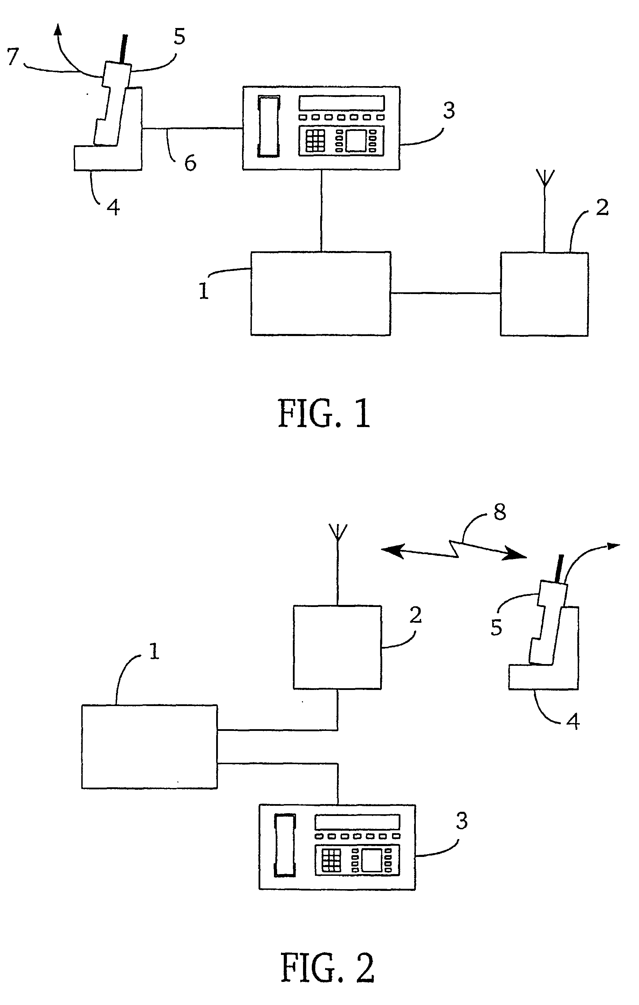

Das in Fig. 1 dargestellte Kommunikationssystem enthält eine Vermittlungsvorrichtung 1, an die eine Basisstation 2 und ein schnurgebundenes Endgerät 3 angeschlossen sind. Der Anschluß an die Vermittlungsvorrichtung 1 erfolgt beispielsweise bei digitalen Nebenstellenanlagen über einen S₀-Bus. Das schnurgebundene Endgerät 3 ist über ein Kabel mit einer Ladestation 4 verbunden, die als Aufnahmevorrichtung für ein schnurloses Endgerät 5 dient. Im auf die Ladestation 4 aufgelegten Zustand des schnurlosen Endgerätes 5 wird dessen Akkumulatoreinheit durch die Ladestation 4 aufgeladen.

Sowohl das schnurgebundene Endgerät 3, insbesondere ein Komforttelefon, als auch das schnurlose Endgerät 5, insbesondere ein schnurloses Telefon, sind zur Benutzung durch einen einzigen Benutzer vorgesehen. Befindet sich der Benutzer in seinem eigenen Büro, so wird er es vorziehen, das dort installierte schnurgebundene Endgerät, das in der Regel komfortabler als das schnurlose Endgerät ist, zu benutzen. Ankommende Rufe von der Vermittlungsvorrichtung werden in diesem Fall an das schnurgebundene Endgerät 3 weitergeleitet. Für den Fall, daß der Benutzer sein Büro verläßt und gleichzeitig erreichbar sein will, wird dieser das schnurlose Endgerät mitnehmen, um mit dessen Hilfe Rufe entgegennehmen zu können. Beim Entfernen des schnurlosen Endgerätes 5 aus seiner zugehörigen Ladestation 4, was durch den Pfeil 7 angedeutet ist, wird durch die Ladestation 4 ein Detektorsignal über das Kabel 6 an das schnurgebundene Endgerät 3 übermittelt. Das Entfernen des schnurlosen Endgerätes 5 wird beispielsweise mit einem in der Ladestation 4 angeordneten Kontakt- oder Ladestromfühler detektiert. Das schnurgebundene Endgerät 3 ist so programmiert, daß es durch Umsetzen des Detektorsignals in ein Rufumleitungsaktivierungssignal automatisch eine Rufumleitung zum schnurlosen Endgerät 5 in der Vermittlungsvorrichtung 1 aktiviert. Die Aktivierung erfolgt beispielsweise beim ISDN (Integrated Services Digital Network) anhand des Protokolls 12 TR7 (DKZE). Ankommende Rufe für den Benutzer werden nun über die Basisstation 2 an das schnurlose Endgerät 5 weitergeleitet. Kommunikationsvorgänge mit dem Benutzer werden somit über das schn urlose Endgerät 5 und die Basisstation 2, die schnurgebunden mit der Vermittlungsvorrichtung 1 gekoppelt ist, geführt. Nach der Rückkehr des Benutzers in sein eigenes Büro wird dieser das schnurlose Endgerät 5 wieder auf die Ladestation 4 auflegen, wodurch ein automatisches Deaktivieren der Rufumleitung mit Hilfe eines Deaktivierungssignals bewirkt wird. Der Deaktivierungsvorgang erfolgt in analoger Weise zum Aktivierungsvorgang der Rufumleitung. In anderen Ausführungsformen ist anstelle der automatischen Deaktivierung der Rufumleitung eine manuelle Deaktivierung vorgesehen, beispielsweise durch Betätigung einer entsprechenden Taste am schnurlosen Endgerät 5 oder auch am schnurgebundenen Endgerät 3.

In Fig. 2 ist eine andere Ausführung des erfindungsgemäßen Kommunikationssystems dargestellt. Im Unterschied zu Fig. 1 ist die Ladestation 4 nicht über ein Kabel, das zur Übertragung eines Detektorsignals dient, mit dem schnurgebundenen Endgerät 3 verbunden. In diesem Fall weist das schnurlose Endgerät 5 selbst einen Kontakt- oder Ladestromfühler auf, mit dessen Hilfe detektiert wird, ob das schnurlose Endgerät 5 auf die Ladestation 4 aufgelegt oder aus dieser entfernt ist. Nach dem Entfernen des schnurlosen Endgerätes 5 aus der Ladestation 4 sendet dieses auf dem Funkweg ein Steuersignal an die Basisstation 2. Der Funkweg ist durch den Doppelpfeil 8 angedeutet. Die Basisstation 2 setzt dieses empfangene Steuersignal in ein entsprechendes Rufumleitungsaktivierungssignal an die Vermittlungsvorrichtung 1 um, so daß eine automatische Aktivierung der Rufumleitung vom schnurgebundenen Endgerät 3 zum schnurlosen Endgerät 5 in der Vermittlungsvorrichtung 1 erfolgt. Die Übertragung des Steuersignals von dem schnurlosen Endgerät 5 an die Basisstation 2 wird bei digitalen Nebenstellenanlagen wiederum durch das oben erwähnte ISDN-Protokoll 12 TR7 (DKZE) durchgeführt. Ein späteres Auflegen des schnurlosen Endgerätes 5 auf die Ladestation 4 bewirkt in analoger Weise das Deaktivieren der Rufumleitung durch Senden eines Steuersignals an die Basisstation 2.

Sowohl im Kommunikationssystem nach Fig. 1 als auch im Kommunikationssystem nach Fig. 2 kann an Stelle der Rufumleitung eine Rufweiterschaltung eingesetzt werden.

Wird während eines über das schnurgebundene Endgerät 3 geführten Gesprächs das schnurlose Endgerät 5 durch den Benutzer aus der Ladestation 4 entnommen, so ist in diesem Fall eine automatische Verbindungsübergabe ("call transfer"), d.h. ein automatisches Umschalten vom schnurgebundenen Endgerät 3 auf das schnurlose Endgerät 5 in analoger Weise zu den Erläuterungen zu Fig. 1 oder 2 vorgesehen.

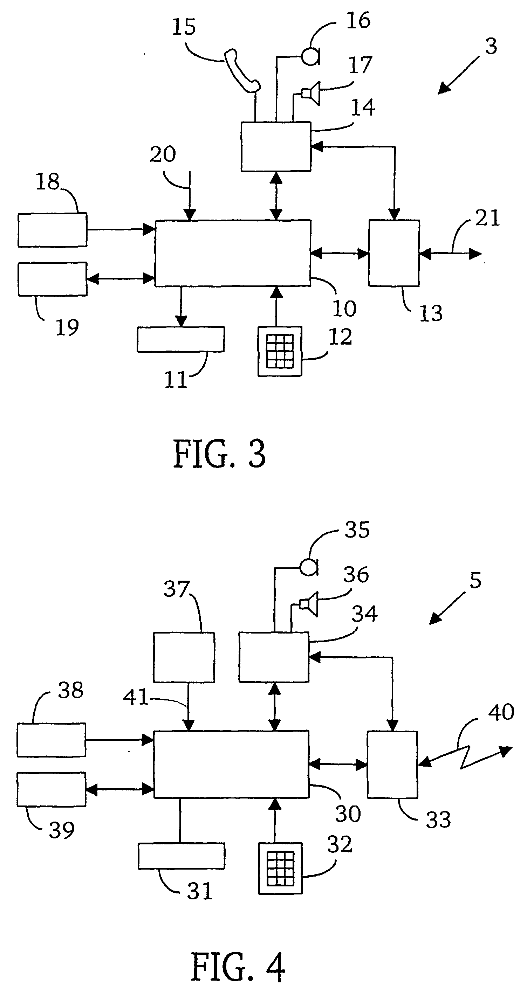

Fig. 3 zeigt ein Blockschaltbild des schnurgebundenen Endgerätes 3 (schnurgebundenes Telephon). Dieses enthält einen Mikroprozessor 10, eine Anzeigevorrichtung 11, eine. Tastatureingabevorrichtung 12, eine Schnittstelle 13, eine Sprachein-/Sprachausgabevorrichtung 14, an die ein Hörer 15, ein Mikrophon 16 und ein Lautsprecher 17 angeschlossen sind, eine Programmspeichereinheit 18 und eine Datenspeichereinheit 19. Der Mikroprozessor 10 ist die zentrale Steuer- und Verarbeitungseinheit des schnurgebundenen Endgerätes 3. Er arbeitet nach einem in der Programmspeichereinheit 18 abgelegten Programm. Zu verarbeitende Daten können vom Mikroprozessor 10 in die Datenspeichereinheit 19 eingelesen bzw. aus dieser ausgelesen werden. Über die mit dem Mikroprozessor 10 und der Sprachein-/ Sprachausgabevorrichtung 14 gekoppelte Schnittstelle 13 werden Daten- oder Sprachsignale bidirektionell mit der Vermittlungsvorrichtung 1 ausgetauscht, was durch den Doppelpfeil 21 angedeutet ist. Die Sprachein-/Sprachausgabevorrichtung 14, die bidirektionell auch mit dem Mikroprozessor 10 verbunden ist, dient zur Verarbeitung von Sprachsignalen, die über den Hörer 15 oder das Mikrophon 16 und den Lautsprecher 17, die in eine Freisprecheinrichtung integriert sind, empfangen oder ausgesendet werden.

Über den Eingang 20 des Mikroprozessors 10, der über das Kabel 6 mit der Ladestation 4 gekoppelt ist, werden für den Fall einer automatischen Rufumleitungsaktivierung oder -deaktivierung nach Fig. 1 Detektorsignale empfangen, die den Mikroprozessor 10 darüber informieren, ob das schnurlose Endgerät 5 auf der Ladestation 4 aufliegt oder aus dieser entfernt ist. Das in der Programmspeichereinheit 18 abgelegte Programm ist so gestaltet, daß der Mikroprozessor 10 als Antwort auf das am Eingang 20 anliegende Detektorsignal die automatische Rufumleitung bzw. während eines Kommunikationsvorgangs (Gespräch) eine automatische Verbindungsübergabe über die Schnittstelle 13 in der Vermittlungsvorrichtung 1 aktiviert oder deaktiviert. Mit Hilfe der Tastatureingabevorrichtung 12 wird als Rufumleitungsziel das schnurlose Endgerät 5 programmiert, was dem Abspeichern einer entsprechenden Information in der Datenspeichereinheit 19 entspricht.

Für den Fall, daß die automatische Rufumleitung nicht über das schnurgebundene Endgerät 3 wie in Fig. 1, sondern über das schnurlose Endgerät 5 wie in Fig. 2 aktiviert oder deaktiviert wird, wird der Eingang 20 des Mikroprozessors 10 nicht benutzt oder für andere Anwendungen programmiert.

In Fig. 4 ist ein Blockschaltbild des schnurlosen Endgerätes 5 dargestellt. Es enthält einen Mikroprozessor 30, eine Anzeigevorrichtung 31, eine Tastatureingabevorrichtung 32, eine Schnittstelle 33, eine Sprachein-/Sprachausgabevorrichtung 34, an die ein Mikrophon 35 und ein Lautsprecher 36 angeschlossen sind. Für den Fall einer automatischen Rufumleitung bzw. Verbindungsübergabe gemäß Fig. 2 ist ein Detektor 37 vorgesehen. Weiterhin enthält das schnurlose Endgerät 5 eine Programmspeichereinheit 38 und eine Datenspeichereinheit 39. Die Schnittstelle 33 ist eine Luftschnittstelle, die ausgangsseitig über den Funkweg eine Verbindung mit der Basistation 2 herstellt, was durch den Doppelpfeil 40 angedeutet ist. Der Detektor 37 ist als Kontakt- oder Ladestromfühler ausgeführt. Er liefert an den Eingang 41 des Mikroprozessors 30 ein Detektorsignal, das die Information enthält, ob das schnurlose Endgerät 5 aus der Ladestation 4 entfernt ist oder nicht. Dieses Signal wird vom Mikroprozessor 30 so weiterverarbeitet, daß über die Schnittstelle 33 ein Steuersignal an die Basisstation 2 gesendet wird, die wiederum eine Aktivierung der Rufumleitung bzw. Verbindungsübergabe in der Vermittlungsvorrichtung 1 bewirkt, wenn das schnurlose Endgerät 5 aus der Ladestation 4 entfernt wird. Wird später das schnurlose Endgerät 5 wieder auf die Ladestation 4 aufgelegt, erfolgt die automatische Deaktivierung der Rufumleitung bzw. Verbindungsübergabe in analoger Weise.

Die automatische Aktivierung bzw. Deaktivierung der Rufumleitung gemäß Fig. 2 kann durch kleine Änderungen des im Programmspeicher 38 abgespeicherten Programms für den Mikroprozessor 30 implementiert werden. Über die Tastatur 32 kann der Rufumleitungsursprung, d.h. die Adresse bzw. Telephonnummer des schnurgebundenen Endgeräts 3, programmiert und im Datenspeicher 39 abgelegt werden.

Bei der automatischen Aktivierung der Rufumleitung über das schnurgebundene Endgerät 3 gemäß Fig. 1 ist keine Programmänderung des in der Programmspeichereinheit 38 des schnurlosen Endgeräts 5 abgelegten Programms und auch kein Detektor 37 erforderlich. Der Eingang 41 des Mikroprozessors 30 wird dann nicht oder für andere Anwendungen genutzt.

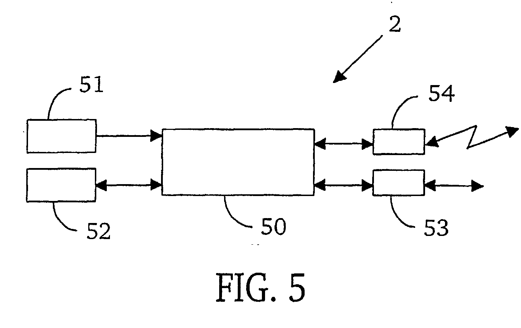

Fig. 5 zeigt ein Blockschaltbild der Basistation 2 nach Fig. 1 und 2. Diese enthält im wesentlichen einen Mikroprozessor 50, eine Programmspeichereinheit 51 eine Datenspeichereinheit 52, eine Schnittstelle 53 und eine Schnit tstelle 54. In der Programmspeichereinheit 51 ist das Programm abgelegt, nach dem die Basisstation 2 Daten weiterverarbeitet. Der Datenspeicher 52 enthält Daten, die vom Mikroprozessor 50 ausgelesen werden, oder von diesem in der Datenspeichereinheit 52 abgelegt worden sind. Der Mikroprozessor 50 ist über die Schnittstelle 53 beispielsweise über einen S₀-Bus mit der Vermittlungsvorrichtung 1 gekoppelt. Über die Schnittstelle 54 ist der Mikroprozessor 50 auf dem Funkweg mit dem schnurlosen Endgerät 5 gekoppelt. Die Basisstation führt gegebenenfalls eine Formatwandlung der zu übertragenden Nachrichten von Schni ttstelle 3 auf Schnittstelle 4 und umgekehrt aus. Für den Fall einer automatischen Rufumleitung gemäß Fig. 2 ist eine Anpassung des in der Programmspeichereinheit 51 abgelegten Programms erforderlich. Bei der automatischen Rufumleitung gemäß Fig. 1 sind keine programmtechnischen Änderungen in der Basisstaion 2 notwendig.

In den Anlagen 1 bis 4 sind Programmabläufe des erfindungsgemäßen Kommunikationssystems für die Vermittlungsvorrichtung 1, das schnurgebundene Endgerät 3, das schnurlose Endgerät 5 und für die Basisstation 2 dargestellt.

Die dargestellten Programmabläufe sind in Programmodulen zusammengefaßt, deren Aufruf jeweils mit einer Zustandsänderung der Vermittlungsvorrichtung 1, des schnurgebundenen Endgeräts 3, des schnurlosen Endgeräts 5 oder der Basisstation 2 einhergeht. Sprünge von einem Modul zu einem anderen sind möglich. Die verwendeten Bezugszeichen entsprechen denen in den beschriebenen Figuren. Die erwähnte Rufumleitung ist immer eine Rufumleitung von dem schnurgebundenen Endgerät 3 zum schnurlosen Endgerät 5. In den aufgeführten Programmabläufen sind nur die für die Erfindung wesentlichen Programmbestandteile aufgeführt, die im folgenden näher erläutert werden.

Zu den im Anhang 1 aufgeführten Programmabläufen in der Vermittlungsvorrichtung 1:

Wird das Programmodul "Ruhezustand" aufgerufen, geht die Vermittlungsvorrichtung 1 in den Ruhezustand über, d.h. sie ist in Bezug auf das schnurgebundene Endgerät 3 und das schnurlose Endgerät 5 nicht aktiv. Dann wird zunächst abgefragt, ob in der Vermittlungsvorrichtung 1 ein Ruf für das schnurgebundene Endgerät 3 empfangen wurde. Für den Fall, daß diese erste Bedingung erfüllt ist, wird zunächst ein Ruf an das schnurgebundene Endgerät 3 gesendet und dann die Anweisung, in das Programmodul "Zustand mit Ruf für 3" zu springen, ausgeführt. Die einer Bedingungsabfrage zugeordneten und auf diese nachfolgenden Anweisungen sind in den vorliegenden Programmodulen eingerückt dargestellt. Wird die erste Bedingungsabfrage verneint, so wird der erwähnte Sprung nicht ausgeführt und es wird abgefragt, ob in der Vermittlungsvorrichtung 1 das Aktivierungssignal für die Rufumleitung vom schnurgebundenen Endgerät 3 zum schnurlosen Endgerät 5 empfangen wurde. Für den Fall, daß diese zweite Bedingung erfüllt ist, wird in der Vermittlungsvorrichtung 1 die Rufumleitung aktiviert und weiterhin wird ein Sprung zum Modul "Ruhezustand mit Rufumleitung" ausgeführt. Für den Fall, daß auch die zweite Bedingungsabfrage verneint wird, bleibt die Vermittlungsvorrichtung 1 in ihrem Ruhezustand. Die beiden Bedingungen werden im folgenden solange zyklisch abgefragt, bis aus dem Modul "Ruhezustand" herausgesprungen wird. Diese Verfahrensweise gilt analog auch für alle nachfolgenden Programmodule.

Im Programmodul "Zustand mit Ruf für 3" wird zunächst abgefragt, ob das Aktivierungsignal für die Rufumleitung empfangen wurde. Liegt diese erste Bedingung vor, wird zunächst die Rufumleitung in der Vermittlungsvorrichtung 1 aktiviert. Dann wird der Ruf an das schnurgebundene Endgerät 3 zurückgenommen und ein Ruf an das schnurlose Endgerät 5 gesendet. Weiterhin wird ein Sprung in das Programmodul "Zustand mit Ruf für 5" ausgeführt. Danach wird abgefragt, ob das schnurgebundene Endgerät 3 auf diesen Ruf antwortet. Ist dies der Fall, wird ein Sprung in das Programmodul "Zustand mit Gespräch mit 3" eingeleitet.

Im Programmodul "Ruhezustand mit Rufumleitung" sind zwei Bedingungsabfragen vorgesehen. Zunächst wird abgefragt, ob ein Ruf für das schnurgebundene Endgerät 3 empfangen wurde. Wird dies bejaht, so wird ein Ruf an das schnurlose Endgerät 5 gesendet und ein Sprung in das Programmodul "Zustand mit Ruf für 5" angeführt. In einer zweiten Bedingungsabfrage wird ermittelt, ob ein Deaktivierungssignal für die Rufumleitung empfangen wurde. Ist dies der Fall, wird die Rufumleitung deaktiviert und ein Sprung in das Programmodul "Ruhezustand" ausgeführt.

Im Programmodul "Zustand mit Gespräch mit 3" hat die Vermittlungsvorrichtung 1 eine Gesprächsverbindung des schnu rgebundenen Endgeräts 3 mit einem anderen Teilnehmer hergestellt. Falls in diesem Zustand das Aktivierungssignal für die Rufumleitung vom schnurgebundenen Endgerät 3 zum schnurlosen Endgerät 5 empfangen wird, erfolgt eine Aktivierung der Rufumleitung in der Vermittlungsvorrichtung 1 und weiterhin ein Sprung in das Programmodul "Zustand mit Gespräch mit 3 mit Rufumleitung". Falls während des Gesprächs die Vermittlungsvorrichtung 1 ein Signal für eine Gesprächsübergabe vom schnurgebundenen Endgerät 3 zum schnurlosen Endgerät 5 empfängt, d.h. wenn das schnurlose Endgerät 5 aus der Ladestation 4 entfernt wird, so wird in der Vermittlungsvorrichtung 1 eine Verbindungsübergabe von dem schnurgebundenen Endgerät 3 auf das schnurlose Endgerät 5 aktiviert und es erfolgt ein Sprung in das Programmodul "Zustand mit Ruf für 5". Falls ein Verbindungsbeendigungssignal in der Vermittlungsvorrichtung 1 empfangen wird, beispielsweise wenn der Benutzer des schnurgebundenen Endgeräts zur Beendigung des Gesprächs seinen Telefonhörer auflegt, wird die Verbindung des schnurgebundenen Endgeräts 3 mit dem mit ihm kommunizierenden Teilnehmer getrennt und ein Sprung in das Programmodul "Ruhezustand" ausgeführt. Weiterhin wird die Rufumleitung deaktiviert.

Im Programmodul "Zustand mit Ruf für 5" wird von der Vermittlungsvorrichtung 1 ein Ruf an das schnurlose Endgerät 5 gesendet. Falls ein Deaktivierungssignal für die Rufumleitung empfangen wird, wird die in diesem Zustand der Vermittlungsvorrichtung 1 aktivierte Rufumleitung deaktiviert, der Ruf an das schnurlose Endgerät 5 zurückgenommen, ein Ruf an das schnurgebundene Endgerät 3 gesendet und ein Sprung in das Programmodul "Zustand mit Ruf für 3" ausgeführt. Wird in dem Zustand mit einem Ruf für das schnurlose Endgerät 5 ein Aktivierungssignal für die Rufumleitung empfangen, so wird die Rufumleitung aktiviert. Für den Fall, daß bei dem Ruf für das schnurlose Endgerät 5 von diesem ein Antwortsignal gesendet wird, d.h. wenn der Benutzer des schnurlosen Endgeräts 5 das Gespräch annimmt, erfolgt ein Sprung in das Programmodul "Zustand mit Gespräch mit 5". Falls der Ruf für das schnurlose Endgerät 5 zurückgenommen wird, erfolgt ein Sprung in das Programmmodul "Ruhezustand mit Rufumleitung".

Beim Aufruf des Programmoduls "Zustand mit Gespräch mit 3 mit Rufumleitung" liegt der Fall vor, daß während eines Gesprächs eines Teilnehmers mit dem schnurgebundenen Endgerät 3 die Rufumleitung aktiviert wurde. Dies hat nicht automatisch eine Gesprächs- bzw. Verbindungsübergabe übergabe zur Folge. Falls nun von der Vermittlungsvorrichtung 1 ein Signal für eine Gesprächsübergabe vom schnurgebundenen Endgerät 3 an das schnurlose Endgerät 5 empfangen wird, erfolgt eine Verbindungsübergabe vom schnurgebundenen Endgerät 3 auf das schnurlose Endgerät 5, d.h. es wird anstelle der Verbindung vom schnurgebundenen Endgerät 3 mit einem anderen Teilnehmer eine Verbindung vom schnurlosen Endgerät 5 mit diesem anderen Teilnehmer hergestellt. Weiterhin wird ein Sprung in das Programmodul "Zustand mit Ruf für 5" durchgeführt. Weiterhin wird abgefragt, ob ein Verbindungsbeendigungssignal empfangen wurde, das z.B. gesendet wird, wenn einer der Gesprächsteilnehmer das Gespräch beenden will. Dann trennt bzw. beendet die Vermittlungsvorrichtung 1 die Verbindung zwischen dem schnurgebundenen Endgerät 3 und dem anderen Teilnehmer und weiterhin wird ein Sprung in das Programmodul "Ruhezustand mit Rufumleitung" durchgeführt. Wird im vorliegenden Programmodul bzw. Zustand der Vermittlungsvorrichtung 1 ein Deaktivierungssignal für die Rufumleitung empfangen, so deaktiviert die Vermittlungsvorrichtung 1 die Rufumleitung vom schnurgebundenen Endgerät 3 zum schnurlosen Endgerät 5 und es wird ein Sprung in das Programmodul "Zustand mit Gespräch mit 3" durchgeführt.

Im Programmodul "Zustand mit Gespräch mit 5" ist das schnurlose Endgerät 5 mit einem anderen Teilnehmer für einen Kommunikationsvorgang verbunden. Für den Fall, daß ein Verbindungsbeendigungssignal empfangen wird, z.B. wenn einer der beiden Gesprächsteilnehmer seinen Telefonhörer auflegt oder eine Taste zur Beendigung des Gesprächs drückt, wird in der Vermittlungsvorrichtung 1 die Verbindung zwischen dem schnurlosen Endgerät 5 und dem anderen Teilnehmer beendet, und es folgt ein Sprung in das Programmodul "Ruhezustand mit Rufumleitung". Im vorliegenden Programmodul bzw. Zustand der Vermittlungsvorrichtung 1 ist die Rufumleitung vom schnurgebundenen Endgerät 3 zum schnurlosen Endgerät 5 aktiviert. Falls von der Vermittlungsvorrichtung 1 ein Deaktivierungssignal zur Deaktivierung der Rufumleitung empfangen wird, leitet diese die Deaktivierung der Rufumleitung ein und ein Sprung in das Programmodul "Zustand mit Gespräch mit 5 ohne Rufumleitung" wird durchgeführt.

Das zuletzt dargestellte Programmodul für die Vermittlungsvorrichtung 1 lautet "Zustand mit Gespräch mit 5 ohne Rufumleitung". In dieses Programmodul wird gesprungen, wenn während eines Gesprächs mit dem schnurlosen Endgerät 5 eine Deaktivierung der Rufumleitung vom schnurgebundenen Endgerät 3 zum schnurlosen Endgerät 5 erfolgt. Falls in diesem Programmodul bzw. Zustand der Vermittlungsvorrichtung 1 von dieser ein Verbindungsbeendigungssignal empfangen wird, wird die Gesprächsverbindung von der Vermittlungsvorrichtung beendet und ein Sprung in das Programmodul "Ruhezustand" durchgeführt. Für den Fall, daß die Vermittlungsvorrichtung 1 ein Aktivierungssignal für die Rufumleitung empfängt, aktiviert die Vermittlungsvorrichtung 1 die Rufumleitung und es wird ein Sprung in das Programmodul "Zustand mit Gespräch mit 5" ausgeführt.

Zu den im Anhang 2 aufgeführten Programmabläufen im schnurgebundenen Endgerät 3:

Die im folgenden näher beschriebenen Programmodule des Anhangs 2 beziehen sich auf eine Aktivierung der Rufumleitung, bei der das schnurgebundene Endgerät 3 zur Umsetzung eines von der Ladestation 4 erzeugten Detektorsignals in ein an die Vermittlungsvorrichtung 1 geliefertes Rufumleitungsaktivierungssignal dient (siehe Fig. 1 mit zugehöriger Beschreibung).

Wird im Ruhezustand des schnurgebundenen Endgeräts 3 das schnurlose Endgerät 5 aus der Ladestation 4 entfernt, sendet das schnurgebundene Endgerät 3 ein Aktivierungssignal für die Rufumleitung an die Vermittlungsvorrichtung 1. Über das Entfernen des schnurlosen Endgeräts 5 aus seiner Ladestation 4 wird das schnurgebundene Endgerät 3 mit Hilfe des über ein Kabel übertragenen Detektorsignals informiert. Nach dem Senden des Aktivierungssignals wird ein Sprung in das Programmodul "Ruhezustand mit 5 aus 4 entfernt" ausgeführt. Weiterhin wird im Ruhezustand abgefragt, ob ein Ruf an das schnurgebundene Endgerät 3 empfangen wurde. Ist dies der Fall, so wird ein Rufton über den Lautsprecher 17 ausgegeben und ein Sprung in das Programmodul "Signalisierung" ausgeführt.

Im Programmodul "Ruhezustand mit 5 aus 4 entfernt" ist die Rufumleitung vom schnurgebundenen Endgerät 3 zum schnurlosen Endgerät 5 aktiviert. Falls in diesem Zustand das schnurlose Endgerät 5 auf seine Ladestation 4 aufgelegt wird, sendet das schnurgebundene Endgerät 3 ein Deaktivierungssignal zur Deaktivierung der Rufumleitung an die Vermittlungsvorrichtung 1 und es erfolgt ein Sprung in das Programmodul "Ruhezustand".

Im Programmodul bzw. Zustand "Signalisierung" wird dem Benutzer der ankommende Ruf signalisiert. Dabei wird über einen Lautsprecher ein Rufton ausgegeben. Falls in diesem Zustand der Ruf an das schnurgebundene Endgerät 3 zurückgenommen wird, wird ein Sprung in das Programmodul "Ruhezustand" ausgeführt. Falls ein vorliegender Ruf an das schnurgebundene Endgerät 3 von diesem angenommen wird, wird die Vermittlungsvorrichtung 1 darüber informiert und in das Programmodul "Gesprächszustand" gesprungen. Falls während des Signalisierungszustandes das schnurlose Endgerät 5 aus der Ladestation 4 entfernt wird, sendet das schnurgebundene Endgerät 3 ein Aktivierungssignal für die Rufumleitung an die Vermittlungsvorrichtung 1 und weiterhin wird ein Sprung in das Programmodul "Ruhezustand mit 5 aus 4 entfernt" ausgeführt.

Im Gesprächszustand bzw. Programmodul "Gesprächszustand" ist über die Vermittlungsvorrichtung 1 eine Verbindung vom schnurgebundenen Endgerät 3 zu einem mit diesem Endgerät kommunizierenden anderen Teilnehmer durchgeschaltet. Falls in diesem Zustand ein Gesprächsbeendigungssignal empfangen wird, z.B. wenn einer der Gesprächsteilnehmer auflegt oder eine Gesprächsbeendigungstaste drückt, wird die Verbindung beendet und ein Sprung in das Programmodul "Ruhezustand" ausgeführt. Wird im Gesprächszustand das schnurlose Endgerät 5 aus der Ladestation 4 entfernt, wird ein Aktivierungssignal für die Rufumleitung an die Vermittlungsvorrichtung 1 gesendet, ein Signal für eine Gesprächsübergabe bzw. Verbindungsübergabe von dem schnurgebundenen Endgerät 3 nach dem schnurlosen Endgerät 5 an die Vermittlungsvorrichtung 1 gesendet und ein Sprung in das Programmodul "Ruhezustand mit 5 aus 4 entfernt" ausgeführt.

Zu den im Anhang 3 aufgeführten Programmabläufen im schnurlosen Endgerät 5:

Eine Aktivierung der Rufumleitung erfolgt bei den im folgenden näher beschriebenen Programmabläufen des Anhangs 3 über das schnurlose Endgerät 5 und die Basisstation 2 (siehe Fig. 2 mit zugehöriger Beschreibung).

Im Programmodul "Ruhezustand mit 5 auf 4 aufgelegt" befindet sich das schnurlose Endgerät 5 im Ruhezustand und die Rufumleitung zu diesem Endgerät ist nicht aktiviert. Falls das schnurlose Endgerät 5 aus seiner Ladestation 4 entfernt wird, sendet dieses auf dem Funkweg ein Steuersignal an die Basisstation 2, die das Steuersignal in ein Rufumleitungsaktivierungssignal für die Vermittlungseinrichtung 1 umsetzt, wo die Rufumleitung aktiviert wird. Weiterhin wird im Falle des Entfernens des schnurlosen Endgeräts 5 aus seiner Ladestation 4 ein Sprung in das Programmodul "Ruhezustand mit 5 aus 4 entfernt" ausgeführt.

Im Programmodul "Ruhezustand mit 5 aus 4 entfernt" ist die Rufumleitung aktiviert. Falls das aus der Ladestation 4 entfernte schnurlose Endgerät 5 wieder auf die Ladestation 4 aufgelegt wird, wird ein Steuersignal zur Deaktivierung der Rufumleitung an die Basisstation 2 gesendet und ein Sprung in das Programmodul "Ruhezustand mit 5 auf 4 aufgelegt" durchgeführt. Falls das schnurlose Endgerät 5 einen Ruf empfängt, wird über dessen Lautsprecher 36 ein Rufton ausgegeben und ein Sprung in das Programmodul "Signalisierung" bewirkt.

Im Programmodul "Signalisierung" wird dem Benutzer der ankommende Ruf signalisiert. Falls kein Ruf mehr an das schnurlose Endgerät 5 vorliegt, wird in das Programmodul "Ruhezustand mit 5 auf 4 entfernt" gesprungen. Für den Fall einer Rufannahme durch den Benutzer des schnurlosen Endgeräts 5 wird die Vermittlungsvorrichtung 1 darüber informiert und es erfolgt ein Sprung in das Programmodul "Gesprächszustand".

Im Programmodul "Gesprächszustand" ist eine Verbindung zwischen dem schnurlosen Endgerät 5 und einem anderen Teilnehmer über die Basisstation 2 und die Vermittlungsvorrichtung 1 durchgeschaltet. Falls in diesem Zustand ein Beendigungssignal zur Gesprächsbeendigung empfangen wird, z.B. wenn der Benutzer des schnurlosen Endgeräts 5 die Gesprächsbeendigungstaste drückt, wird die Verbindung beendet und ein Sprung in das Programmodul "Ruhezustand mit 5 aus 4 entfernt" ausgeführt. Für den Fall, daß das schnurlose Endgerät 5 auf die Ladestation 4 aufgelegt wird, wird ein Steuersignal für die Deaktivierung der Rufumleitung an die Basisstation gesendet, die Verbindung beendet und ein Sprung in das Programmodul "Ruhezustand mit 5 auf 4 aufgelegt" durchgeführt.

Zum im Anhang 4 aufgeführten Programmablauf in der Basisstation 2:

Der angegebene Programmablauf bezieht sich wie die Programmabläufe im Anhang 3 auf den Fall, daß eine Aktivierung der Rufumleitung über das schnurlose Endgerät 5 und die Basisstation 2 erfolgt.

Es ist nur ein einziges Programmodul angegeben, das zur Erläuterung der Erfindung ausreicht und Abläufe während eines hier als "Grundzustand" bezeichneten Zustandes der Basisstation 2 beschreibt. Falls in diesem Zustand der Basisstation 2 ein Steuersignal für die Aktivierung der Rufumleitung über die Schnittstelle 54 von dem schnurlosen Endgerät 5 empfangen wird, sendet die Basisstation 2 ein Aktivierungssignal zur Aktivierung der Rufumleitung über die Schnittstelle 53 an die Vermittlungsvorrichtung 1. Falls von der Basisstation 2 ein Steuersignal für die Deaktivierung der Rufumleitung über die Schnittstelle 54 von dem schnurlosen Endgerät 5 empfangen wird, sendet die Basistation 2 ein Deaktivierungssignal zur Deaktivierung der Rufumleitung über die Schnittstelle 53 an die Vermittlungsvorrichtung 1. Wird über die Schnittstelle 53 oder die Schnittstelle 54 ein Verbindungsbeendigungssignal empfangen, beendet die Basisstation 2 die Verbindung zum schnurlosen Endgerät 5.

### Anhang 1:

### Programmabläufe in der Vermittlungsvorrichtung 1:

### Ruhezustand:

- Falls:: Ruf für 3 empfangen
Ruf an 3 senden;
Sprung nach: Zustand mit Ruf für 3;
- Falls:: Aktivierungssignal für Rufumleitung empfangen
Rufumleitung aktivieren;
Sprung nach: Ruhezustand mit Rufumleitung;

### Zustand mit Ruf für 3:

- Falls:: Aktivierungssignal für Rufumleitung empfangen
Rufumleitung aktivieren;
Rücknahme des Rufs für 3;
Ruf an 5 senden;
Sprung nach: Zustand mit Ruf für 5;
- Falls:: 3 antwortet
Sprung nach: Zustand mit Gespräch mit 3;

### Ruhezustand mit Rufumleitung:

- Falls:: Ruf für 3 empfangen
Ruf an 5 senden;
Sprung nach: Zustand mit Ruf für 5;
- Falls:: Deaktivierungssignal für Rufumleitung empfangen
Rufumleitung deaktivieren;
Sprung nach: Ruhezustand;

### Zustand mit Gespräch mit 3:

- Falls:: Aktivierungssignal für Rufumleitung empfangen
Rufumleitung aktivieren;
Sprung nach: Zustand mit Gespräch mit 3 mit
Rufumleitung;
- Falls:: Signal für Gesprächsübergabe von 3 nach 5 empfangen
Verbindungsübergabe von 3 auf 5 aktivieren;
Sprung nach: Zustand mit Ruf für 5;
- Falls:: Verbindungsbeendigungssignal empfangen
Verbindung trennen;
Sprung nach: Ruhezustand;
- Falls:: Deaktivierungssignal für Rufumleitung empfangen
Rufumleitung deaktivieren;
Sprung nach: Zustand mit Gespräch mit 3;

### Zustand mit Ruf für 5:

- Falls:: Deaktivierungssignal für Rufumleitung empfangen
Rufumleitung deaktivieren;
Rücknahme des Rufes für 5;
Ruf an 3 senden;
Sprung nach: Zustand mit Ruf für 3;
- Falls:: Aktivierungssignal für Rufumleitung empfangen
Rufumleitung aktivieren;
Sprung nach: Zustand mit Ruf für 5;
- Falls:: 5 antwortet
Sprung nach: Zustand mit Gespräch mit 5;
- Falls:: Rücknahme des Rufs für 5
Sprung nach: Ruhezustand mit Rufumleitung;

### Zustand mit Gespräch mit 3 mit Rufumleitung:

- Falls:: Signal für Gesprächsübergabe von 3 an 5 empfangen
Verbindungsübergabe von 3 auf 5 aktivieren;
Sprung nach: Zustand mit Ruf für 5;
- Falls:: Verbindungsbeendigungssignal empfangen
Verbindung beenden;
Sprung nach: Ruhezustand mit Rufumleitung;
- Falls:: Deaktivierungssignal für Rufumleitung empfangen
Rufumleitung deaktivieren;
Sprung nach: Zustand mit Gespräch mit 3;

### Zustand mit Gespräch mit 5:

- Falls:: Verbindungsbeendigungssignal empfangen
Verbindung beenden;
Sprung nach: Ruhezustand mit Rufumleitung;
- Falls:: Deaktivierungssignal für Rufumleitung empfangen
Rufumleitung deaktivieren;
Sprung nach: Zustand mit Gespräch mit 5 ohne
Rufumleitung;

### Zustand mit Gespräch mit 5 ohne Rufumleitung:

- Falls:: Verbindungsbeendigungssignal empfangen
Verbindung beenden;
Sprung nach: Ruhezustand;
- Falls:: Aktivierungssignal für Rufumleitung empfangen
Rufumleitung aktivieren;
Sprung nach: Zustand mit Gespräch mit 5;

### Anhang 2:

### Programmabläufe im schnurgebundenen Endgerät 3 (Aktivierung der Rufumleitung über die Ladestation 4 und das schnurgebundene Endgerät 3):

### Ruhezustand:

- Falls:: 5 aus 4 entfernt
Aktivierungssignal für Rufumleitung an 1 senden;
Sprung nach: Ruhezustand mit 5 aus 4 entfernt;
- Falls:: Ruf an 3 empfangen
Rufton über Lautsprecher 17 ausgeben;
Sprung nach: Signalisierung;

### Ruhezustand mit 5 aus 4 entfernt:

- Falls:: 5 auf 4 aufgelegt
Deaktivierungssignal für Rufumleitung an 1 senden;
Sprung nach: Ruhezustand;

### Signalisierung:

- Falls:: Rücknahme des Rufs an 3
Sprung nach: Ruhezustand;
- Falls:: Rufannahme durch 3
Signal für Rufannahme durch 3 an 1 senden;
Sprung nach: Gesprächszustand;
- Falls:: 5 aus 4 entfernt
Aktivierungssignal für Rufumleitung an 1 senden;
Sprung nach: Ruhezustand mit 5 aus 4 entfernt;

### Gesprächszustand:

- Falls:: Gesprächsbeendigungssignal empfangen
Verbindung beenden;
Sprung nach: Ruhezustand;
- Falls:: 5 aus 4 entfernt
Aktivierungssignal für Rufumleitung an 1 senden;
Signal für Gesprächsübergabe von 3 nach 5 an 1 senden;
Sprung nach: Ruhezustand mit 5 aus 4 entfernt;

### Anhang 3:

### Programmabläufe im schnurlosen Endgerät 5 (Aktivierung der Rufumleitung über das schnurlose Endgerät 5 und die Basisstation 2) :

### Ruhezustand mit 5 auf 4 aufgelegt:

- Falls:: 5 aus 4 entfernt
Steuersignal für Rufumleitung an 2 senden;
Sprung nach: Ruhezustand mit 5 aus 4 entfernt;

### Ruhezustand mit 5 aus 4 entfernt:

- Falls:: 5 aufgelegt
Steuersignal für Deaktivierung der Rufumleitung an 2 senden;
Sprung nach: Ruhezustand mit 5 auf 4 aufgelegt;
- Falls:: Ruf an 5 empfangen
Rufton über Lautsprecher 36 ausgeben;
Sprung nach: Signalisierung;

### Signalisierung:

- Falls:: Rücknahme des Rufs an 5
Sprung nach: Ruhezustand mit 5 aus 4 entfernt;
- Falls:: Rufannahme durch 5
Signal für Rufannahme durch 5 an 1 senden;
Sprung nach: Gesprächszustand;

### Gesprächszustand:

- Falls:: Beendigungssignal empfangen
Verbindung beenden;
Sprung nach: Ruhezustand mit 5 aus 4 entfernt;
- Falls:: 5 auf 4 aufgelegt
Steuersignal für Deaktivierung der Rufumleitung an 2 senden;
Verbindung beenden;
Sprung nach: Ruhezustand mit 5 auf 4 aufgelegt;

### Anhang 4:

### Programmabläufe in der Basisstation 2 (Aktivlerung der Rufumleitung über das schnurlose Endgerät 5 und die Basisstation 2) :

### Grundzustand:

- Falls:: Steuersignal für Aktivierung der Rufumleitung über Schnittstelle 54 empfangen
Aktivierungssignal für Rufumleitung über
Schnittstelle 53 an 1 senden;
- Falls:: Steuersignal für Deaktivierung der Rufumleitung über Schnittstelle 54 empfangen
Deaktivierungssignal für Rufumleitung über
Schnittstelle 53 an 1 senden;
- Falls:: Verbindungsbeendigungssignal empfangen
Verbindung beenden;

## Patentansprüche

1. Kommunikationssystem mit einer Vermittlungsvorrichtung (1), einem schnurlosen Endgerät (5) und einem schnurgebundenen Endgerät (3), wobei
Mittel (6, 10, 18, 30, 37, 38) zum automatischen Aktivieren einer Rufumleitung oder Rufweiterschaltung vom schnurgebundenen (3) zum schnurlosen Endgerät (5) nach einem Entfernen des schnurlosen Endgeräts (5) aus einer zugehörigen Aufnahmevorrichtung (4) vorgesehen sind, **dadurch gekennzeichnet,**
**daß** Mittel (6, 10, 18, 30, 37, 38) für eine automatische Verbindungsübergabe vom schnurgebundenen auf das schnurlose Endgerät beim Entfernen des schnurlosen Endgeräts (5) aus seiner Aufnahmevorrichtung (4) während eines Kommunikationsvorgangs vorgesehen sind.

2. Kommunikationssystem nach Anspruch 1,
**dadurch gekennzeichnet,**
**daß** das schnurgebundene Endgerät (3) Mittel (20, 10) zum Empfang eines durch das Entfernen des schnurlosen Endgeräts (5) aus seiner Aufnahmevorrichtung (4) erzeugten Detektorsignals und Mittel (10, 13) zum Umsetzen dieses Detektorsignals zum Aktivieren der Rufumleitung oder Rufweiterschaltung oder zur Verbindungsübergabe enthält.

3. Kommunikationsystem nach Anspruch 1,
**dadurch gekennzeichnet,**
**daß** das schnurlose Endgerät (5) Mittel (33) zum Senden eines Steuersignals an eine Basisstation (2) nach dem Entfernen aus seiner Aufnahmevorrichtung (4) aufweist und
**daß** die Basisstation (2) Mittel (50, 51, 52, 53) zur Aktivierung der Rufumleitung oder Rufweiterschaltung in Abhängigkeit von diesem Steuersignal aufweist.

4. Verfahren zum Betreiben eines Kommunikationssystems, das eine Vermittlungsvorrichtung (1), ein schnurloses Endgerät (5) und ein schnurgebundenes Endgerät (3) aufweist, wobei
nach einem Entfernen des schnurlosen Endgeräts (5) aus einer zugehörigen Aufnahmevorrichtung (4) eine Rufumleitung oder Rufweiterschaltung vom schnurgebundenen (3) zum schnurlosen Endgerät (5) automatisch aktiviert wird, **dadurch gekennzeichnet, daß** beim Entfernen des schnurlosen Endgeräts (5) aus seiner Aufnahmevorrichtung (4) während eines Kommunikationsvorgangs eine automatische Verbindungsübergabe vom schnurgebundenen auf das schnurlose Endgerät erfolgt.

## Claims

1. A communication system comprising a service switching point (1), a cordless terminal unit (5) and a corded terminal unit (3), in which means (6, 10, 18, 30, 37, 38) for automatic activation of a call diversion or call forwarding from the corded (3) to the cordless terminal unit (5) are provided after the cordless terminal unit (5) has been removed from an associated charging station (4), **characterized in that** means (6, 10, 18, 30, 37, 38) are provided for an automatic call handover from the corded to the cordless terminal unit when the cordless terminal unit (5) is removed from its charging station (4) during a communication operation.

2. A communication system as claimed in Claim 1, **characterized in that** the corded terminal unit (3) comprises means (20, 10) for receiving a detector signal generated because the cordless terminal unit (5) has been removed from its support (4) and means (10, 13) for converting this detector signal to activate the call diversion or call forwarding or for a call handover.

3. Communication system as claimed in Claim 1, **characterized in that** the cordless terminal unit (5) comprises means (33) for sending a control signal to a base station (2) after it has been removed from its charging station (4) and **in that** the base station (2) comprises means (50, 51, 52, 53) for activating the call diversion or call forwarding in dependence on this control signal.

4. A method of operating a communication system comprising a service switching point (1), a cordless terminal unit (5) and a corded terminal unit (3), in which a call diversion or call forwarding from the corded (3) to the cordless terminal unit (5) is automatically activated after the cordless terminal unit (5) has been removed from an associated charging station (4), **characterized in that** an automatic call handover from the corded to the cordless terminal unit is effected when the cordless terminal unit (5) is removed from its charging station (4) during a communication operation.

## Revendications

1. Système de communication avec un dispositif de commutation (1), un terminal (5) sans fil et un terminal (3) câblé, pour lequel
des moyens (6, 10, 18, 30, 37, 38) sont prévus pour l'activation automatique d'une déviation ou d'un transfert d'appel d'un terminal (3) câblé vers un terminal (5) sans fil après le soulèvement du terminal (5) sans fil d'un dispositif de support (4) correspondant, **caractérisé en ce**
**que** des moyens (6, 10, 18, 30, 37, 38) sont prévus pour un transfert automatique de la communication du terminal câblé au terminal sans fil en cas de soulèvement du terminal (5) sans fil de son dispositif de support (4) pendant un processus de communication.

2. Système de communication selon la revendication 1,
**caractérisé en ce que** le terminal (3) câblé comprend des moyens (20, 10) pour la réception d'un signal de détecteur produit par le soulèvement du terminal (5) sans fil de son dispositif de support (4) et des moyens (10, 13) pour la conversion de ce signal de détecteur pour l'activation de la déviation d'appel ou du transfert d'appel ou pour le transfert de la communication.

3. Système de communication selon la revendication 1,
**caractérisé en ce que** le terminal (5) sans fil présente des moyens (33) pour la transmission d'un signal de commande à une station de base (2) après le soulèvement de son dispositif de support (4) et que la station de base (2) présente des moyens (50, 51, 52, 53) en vue de l'activation de la déviation d'appel ou du transfert d'appel en fonction de ce signal de commande.

4. Procédé d'exploitation d'un système de communication qui présente un dispositif de commutation (1), un terminal (5) sans fil et un terminal (3) câblé, selon lequel une déviation d'appel ou un transfert d'appel du terminal (3) câblé vers le terminal (5) sans fil est activé automatiquement après le soulèvement du terminal (5) sans fil d'un dispositif de support (4) correspondant par le fait qu'un transfert automatique de la communication du terminal câblé vers le terminal sans fil est effectué en cas de soulèvement du terminal sans fil (5) de son dispositif de support (4) pendant un processus de communication.
